# EUROPÄISCHE PATENTANMELDUNG

(11) **EP 2 071 948 A1**
(43) Veröffentlichungstag der Anmeldung: **24.06.2009**
(21) Anmeldenummer: 07024769.7
(22) Anmeldetag: 20.12.2007
(51) Int. Cl.: A01M 7/00

(54) **Sprüh-lanze sowie Adapter- und Düsen-Set für Rückenspritzen**

(71) Anmelder: Bayer CropScience AG, 40789 Monheim (DE)
(72) Erfinder: Friessleben, Reinhard, Dr., 51375 Leverkusen (DE); Öser, Jörg, 45481 Mühlheim an der Ruhr (DE); Lind, Armin, 40789 Monheim (DE); Simon, Volker, 51371 Leverkusen (DE)

(57) **Zusammenfassung**

Lanze (1) für eine tragbare Rückenspritze mit einem eingangsseitigen Anschluss (3a) zum Anschließen der Lanze (1) an den zur Rückenspritze gehörenden Vorratstank, und einem ausgangsseitigen Anschluss (3b), wobei im Bereich des ausgangsseitigen Anschlusses eine Distanzkontrolle (9) zur Konstanthaltung der Arbeitshöhe angeordnet ist.
Düsen- und Adapter-Set zum Anschließen der Lanze (1) an tragbare Rückenspritzen verschiedener Hersteller.
Verfahren zur Herbizidbekämpfung einer einen Baumstamm umgebenen Kreisfläche mit einer Lanze (1) für tragbare Rückenspritzen.

## Beschreibung

Die Erfindung betrifft eine Lanze für tragbare Rückenspritzen mit einem eingangsseitigen Anschluss zum Anschließen der Lanze an den zur Rückenspritze gehörenden Vorratstank, und einem ausgangsseitigen Anschluss, sowie ein Adapter-Set und ein Düsen-Set.

Des Weiteren betrifft die Erfindung ein Verfahren zur Herbizidbekämpfung auf einer einen Baumstamm umgebenen Kreisfläche zur Freihaltung der Fläche bei Ölpalmen und Obstbäumen im Rahmen der Ernte sowie zur Freihaltung des Wurzelflächenbereichs bei Bäumen aller Art.

Rückenspritzen zur Ausbringung von Pestiziden sind aus dem Stand der Technik bekannt. In der Regel besteht eine Rückenspritze aus einem, meist durch Schultergurte auf dem Rücken getragenen, Vorratstank für die Spritzbrühe sowie einer Lanze, deren eingangsseitige Öffnung durch einen Schlauch mit dem Vorratstank verbunden ist und deren ausgangsseitige Öffnung eine Düse aufweist. Im Bereich eines zur Führung der Lanze vorgesehenen Handgriffs kann ein Abstellventil angeordnet sein. Die Förderung der Spritzbrühe erfolgt mittels einer manuell oder maschinell betriebenen Pumpe.

Die Ausbringung von Pestiziden, insbesondere von Herbiziden, kann entweder nach einem rechteckigen Grundmuster (Streifenbehandlung), nach einem kreisrunden Grundmuster (Kreisbehandlung) oder, bezogen auf das Einzelunkraut, als Punktbehandlung durchgeführt werden.

Die flächige Kreisbehandlung im Bereich einer einen Baumstamm umgebenen Kreisfläche kann aus verschiedenen Gründen erfolgen. Zum einen besteht eine Notwendigkeit zur Unkrautbekämpfung im Bereich der Baumwurzeln, weil die Unkräuter mit den Wurzeln des Baumes um die Aufnahme von Wasser und Nährstoffen konkurrieren. Zum anderen kann die Entfernung des Grasbewuchses im Bereich des Baumstammes durch ein nicht-spezifisches Totalherbizid auch sinnvoll sein für Zwecke der Wühlmausbekämpfung, weil dadurch das Auslegen von Ködern erleichtert wird. Die für diesen Zweck in Frage kommenden Totalherbizide, wie z.B. Roundup^{®}, sind dem Fachmann bekannt.

Nachteiligerweise führen die aus dem Stand der Technik bekannten Rückenspritzen und deren Sprühvorrichtungen beim praktischen Einsatz, im Vergleich zur großflächigen Ausbringung von Pestiziden mit Hilfe von fahrbaren Feldspritzen, meist zu sehr hohen Applikationsmengen, d.h. 300 - 600 Liter/ha. Die zur Applikation vorgesehene Spritzbrühe setzt sich zusammen aus Pflanzenschutzmittel, Wasser und gegebenenfalls Hilfs- und Zusatzstoffen. Die Applikationsmengen sind oftmals auch stark von der Person des Anwenders abhängig, weil die Anwender im Umgang mit dem jeweiligen Gerät unterschiedlich geübt sind.

Im Hinblick auf die Notwendigkeit zum nachhaltigen Umgang mit der Natur und den Umweltressourcen besteht ein Bedarf zur Verbesserung der bestehenden Applikationstechniken durch tragbare Rückenspritzen, um auf diese Weise eine Reduzierung der Applikationsmengen zu erreichen.

Weiterhin besteht in Ländern, deren Landwirtschaft durch kleine Betriebseinheiten geprägt ist, ein Bedarf für einen setartig zusammengestellten Düsensatz (Düsen-Set), der verschiedene Applikationsarten ermöglicht und aufgrund eines auf den Düsensatz abgestimmten Adaptersatzes (Adapter-Set) den Anschluss der Lanze an Rückenspritzen von unterschiedlichen Herstellern, bzw. an die von derartigen Rückenspritzen ausgehenden Verbindungsschläuche, erleichtert.

Die Aufgabe der vorliegenden Erfindung besteht in der Bereitstellung einer Lanze für tragbare Rückspritzen unterschiedlicher Hersteller zur homogeneren Ausbringung einer Spritzbrühe, bei gleichzeitiger Einhaltung geringer Applikationsraten.

Außerdem besteht die Aufgabe in der Bereitstellung von technischen Mitteln, insbesondere von Düsen und Adaptern, zum erleichterten Verbinden der erfindungsgemäßen Lanze mit Rückenspritzen verschiedener Hersteller.

Die Aufgabe der homogenen Ausbringung einer Spritzbrühe bei zugleich geringen Applikationssorten wird durch eine Lanze gelöst, die im Bereich des ausgangsseitigen Anschlusses eine Distanzkontrolle zur Konstanthaltung der Arbeitshöhe aufweist.

Die Distanzkontrolle ist mit der Lanze auf eine lösbare Art und Weise verbunden, z.B. durch eine einhängbare Verbindung bzw. durch eine Schraub- oder Steckverbindung.

Die Distanzkontrolle sorgt dafür, dass die Arbeitshöhe durch den Anwender leicht kontrollierbar ist. Durch diese Kontrollmöglichkeit gelingt es dem Anwender die Arbeitshöhe konstant zu halten, so dass der Sprühkegel eine in ihrer Größe im Wesentlichen gleichbleibende Behandlungsfläche besprüht. Auf diese Weise ist die homogene Ausbringung der Spritzbrühe sichergestellt und die Vorraussetzung für die Einhaltung geringer Applikationsraten gegeben. Als "gering" kann eine Applikationsrate im Sinne der Erfindung gelten, wenn sie unter 100 Liter/ha, vorzugsweise unter 50 Liter/ha, liegt.

Die Distanzkontrolle kann aus einem flexiblen oder aus einem starren Material bestehen.

Falls die Distanzkontrolle aus einem starren Material besteht, ist in einer bevorzugten Ausführungsform vorgesehen, dass die Distanzkontrolle mit dem Bereich des ausgangsseitigen Anschlusses der Lanze beweglich verbunden ist, so dass sich die Distanzkontrolle beim Einsatz der Lanze, der Schwerkraft folgend, in Richtung Erdmittelpunkt ausrichten kann.

In einer alternativen bevorzugten Ausführungsform ist vorgesehen, dass die Distanzkontrolle aus einem Stab besteht, der mit dem Bereich des ausgangsseitigen Anschlusses der Lanze starr verbunden ist. Dabei ist vorgesehen, dass die Distanzkontrolle mit der Lanze so verbunden ist, dass diese beim Einsatz der Lanze im Wesentlichen senkrecht zur Erdoberfläche ausgerichtet ist.

In einer besonders bevorzugten Ausführungsform ist der die Distanzkontrolle bildende stabartige Abschnitt am unteren Ende zusätzlich mit einem flexiblen Material verbunden. Die Distanzkontrolle ist in diesem Fall also zweiteilig aufgebaut, wobei das an dem stabartigen Abschnitt untenends beweglich befestigte flexible Material beim Einsatz der Lanze, der Schwerkraft folgend, im Wesentlichen in Richtung Erdmittelpunkt ausgerichtet ist. In der Praxis hat sich bei Einsatz der Düsen TT01 (0,28 L) und TT02 (0,58 L) eine Arbeitshöhe von bis zu einem Meter, vorzugsweise von etwa 0,7 m, bewährt. D.h. die entweder nur aus einem flexiblen Material oder sowohl aus einem starren Abschnitt und aus einem flexiblen Abschnitt bestehende Distanzkontrolle hat im bevorzugten Fall eine Gesamtlänge von etwa 0,7 m.

Es liegt im Rahmen der Erfindung, dass das flexible Material, welches die Distanzkontrolle ganz oder zumindest teilweise bildet, aus einem schnurartigen oder seilartigen Material besteht. Dabei kommen als Material für die einzelnen Filamente oder Fasern, welche die Schnur oder das Seil bilden, ebenfalls sämtliche dem Fachmann bekannten Materialien in Frage. Besonders bevorzugt sind aufgrund der möglicherweise gegebenen Aggressivität der Spritzbrühe kunststoffbasierte Fasern und Filamente.

Ebenso liegt es im Rahmen der Erfindung, dass die Distanzkontrolle aus einer Kette besteht, wobei die einzelnen Glieder der Kette sowohl aus Kunststoff als auch aus Metall, insbesondere aus Edelstahl, bestehen können.

In einer ganz besonders bevorzugten Ausführungsform weist das zur Distanzkontrolle gehörende flexible Material am unteren Ende ein Gewicht auf. Die Schwere des Gewichtes ist dabei so dimensioniert, dass das flexible Material beim Einsatz der Lanze stets geradlinig nach unten, d.h. in Richtung Erdmittelpunkt, ausgerichtet ist. Zugleich ist das Gewicht aber so dimensioniert, dass seine Schwere den Einsatz der Lanze nicht unangenehm beeinflusst.

In einer weiteren bevorzugten Ausführungsform ist der ausgangsseitige Anschluss der Lanze mit einem Bogenstück verbunden. Bei dem Bogenstück handelt es sich um einen bis zu 45° gebogenen winkelartigen Rohrabschnitt der ebenso wie die Lanze selbst einen eingangsseitigen Anschluss und einen ausgangsseitigen Anschluss aufweist. Der eingangsseitige Anschluss des Bogenstücks ist so gestaltet, dass er mit dem ausgangsseitigen Anschluss der Lanze verbindbar ist. Das Bogenstück besteht vorzugsweise aus einem starren Rohrmaterial, wobei dieses sowohl aus einem nicht oder nur wenig biegbaren Kunststoff oder aus Metall besteht.

Die Starrheit des Bogenstücks hat den Vorteil, dass der Sprühkegel nicht unter den durch die Bewegung des Anwenders verursachten Erschütterungen hin und her schwankt. Die Starrheit des Bogens verhindert außerdem ein zusätzliches Abbiegen des Bogenstücks unter dem Einfluss des Gewichtes der am Bogenstück befestigten Distanzkontrolle.

In einer weiteren bevorzugten Ausführungsform ist vorgesehen, dass der ausgangsseitige Anschluss der Lanze mit einem Konstantdruckventil verbunden ist. Das Konstantdruckventil in Kombination mit den entsprechenden Düsen am Applikationsbalken ist wichtig für die Geringhaltung der Applikationsmengen. Falls die Ausgangsseite der Lanze mit einem Bogenstück verbunden ist, so kann das Konstantdruckventil an der Ausgangsseite des Bogenstückes angeordnet sein. Konstantdruckventile sorgen dafür, dass die Durchflussmenge weitgehend unabhängig ist von dem Flüssigkeitsdruck mit dem das Ventil, bzw. die Lanze, beaufschlagt wird. Insbesondere bei manuell bedienten Pumpen, kann die Art der Bedienung der Pumpe durch den jeweiligen Anwender zu einer starken Variation der Durchflussmenge führen. Dieser Nachteil wird durch den Einbau eines Konstantdruckventils verhindert.

Somit dient der Einbau eines Konstantdruckventils zusammen mit dem Einsatz der Distanzkontrolle der homogeneren Ausbringung der Spritzbrühe und somit der Lösung der vorliegenden Aufgabe. Üblich sind Konstantdruckventile mit einem Druck von bis zu 2,0 bar, vorzugsweise 1,5 bar.

In einer weiteren bevorzugten Ausführungsform ist vorgesehen, dass an den ausgangsseitigen Anschluss der Lanze oder an den ausgangsseitigen Anschluss des Bogenstücks oder an den ausgangsseitigen Anschluss des Konstantdruckventils ein Sprühbalken angeschlossen ist. Der quer zur Lanze verlaufende Sprühbalken zeichnet sich dadurch aus, dass er mindestens zwei voneinander beabstandete Anschlüsse für Einzeldüsen aufweist. Die Beabstandung der Düsen auf dem Sprühbalken ist in der Regel so gewählt, dass diese im Bereich der Endabschnitte des Sprühbalkens angeordnet sind.

Prinzipiell ist es natürlich möglich, dass an den ausgangsseitigen Anschluss der Lanze, oder die in ausgangsseitigen Anschluss des Bogenstücks oder an den ausgangsseitigen Anschluss des Konstantdruckventils anstatt eines Sprühbalkens lediglich eine Einzeldüse angeschlossen ist.

Die beiden an dem Sprühbalken angeordneten Düsen können entweder die gleiche Durchflussrate oder aber jeweils unterschiedliche Durchflussraten aufweisen. Falls die Düsen die gleiche Durchflussrate aufweisen eignet sich die mit einem derartigen Sprühbalken ausgestattete Rückenspritze für die Streifenbehandlung, d.h. die homogene Besprühung einer rechteckigen Grundfläche.

Falls die beiden auf dem Sprühbalken angeordneten Düsen unterschiedliche Durchflussraten aufweisen eignet sich die mit einem derartigen Sprühbalken ausgestattete Rückenspritze für die Kreisbehandlung, d.h. die Ausbringung der Spritzbrühe auf einer kreisrunden Fläche.

In einer besonders bevorzugten Ausführungsform ist auf einem Sprühbalken im Bereich der Endabschnitte jeweils eine Düse angeordnet, wobei die Durchflussrate der ersten Düse etwa die Hälfte der Durchflussrate der zweiten Düse aufweist.

In einer am meisten bevorzugten Ausführungsform beträgt die Länge des Sprühbalkens etwa ein bis zwei Meter, wobei die Durchflussrate der einen Düse etwa die Hälfte der Durchflussrate der anderen Düse aufweist. Mit einer derart ausgestatteten Rückenspritze ist die Kreisbehandlung zur Freihaltung der Erntefläche bei Ölpalmen und Obstbäumen besonders leicht durchführbar.

In einer weiteren bevorzugten Ausführungsform eines mit zwei gleichen Düsen ausgestatteten Sprühbalkens ist vorgesehen, dass die Düsen als Prall-Düsen ausgestaltet sind. Die Pralldüsen werden auch als Deflektor-Düsen (TeeJet TK) bezeichnet. Eine mit einem mit derartigem Sprühbalken ausgestattete Rückenspritze eignet sich zur Streifenbehandlung, wobei die Arbeitsbreite im Vergleich zu einem nicht mit Prall-Düsen ausgestatteten Sprühbalken von gleicher Länge erhöht ist.

Es liegt im Rahmen der Erfindung, dass die Lanze im Bereich des eingangsseitigen Anschlusses einen Handgriff aufweist und in diesem Bereich optional zusätzlich ein Abstellventil angeordnet ist.

Die Aufgabe der Bereitstellung von technischen Mitteln zum erleichterten Verbinden einer Sprüh-Lanze mit Rückspritzen verschiedener Hersteller wird durch ein Düsen- und Adapter-Set gelöst, wobei das Düsen-Set mindestens ein Konstantdruckventil, mindestens zwei Prall-Düsen mit gleicher oder unterschiedlicher Durchflussrate, und mindestens zwei Flachstrahldüsen mit gleicher oder unterschiedlicher Durchflussrate aufweist, und das Adapter-Set mindestens ein Bogenstück zum Anschluss an den ausgangsseitigen Anschluss der Lanze und einen Sprühbalken mit mindestens zwei Anschlüssen für Einzeldüsen aufweist. Außerdem beinhaltet das Adapter-Set eine Distanzkontrolle. Das gleiche gilt für das Düsen-Set, falls dieses unabhängig vom Adapter-Set bereitgestellt wird.

In einer bevorzugten Ausführungsform ist vorgesehen, dass das Düsen- und Adapter-Set zusätzlich eine Distanzkontrolle zur Konstanthaltung der Arbeitshöhe der Lanze beinhaltet. Die möglichen Ausführungsformen der Lanze sind hierin dargelegt.

Die Erfindung betrifft auch ein Verfahren zur Herbizidbekämpfung im Bereich der einen Baumstamm gegebenen Kreisfläche (Kreisbehandlung) unter Verwendung einer Lanze, die mit einem Sprühbalken verbunden ist, welcher zwei Düsen mit unterschiedlicher Durchflussrate aufweist. Um eine im Wesentlichen einheitliche Herbizidapplikation im Bereich der den Baumstamm umgebenden Kreisfläche zu erreichen, wird die Düse mit der geringeren Durchflussrate während der Durchführung des Verfahrens stets nahe dem Baumstamm geführt. Die auf der gegenüberliegenden Seite des Balkens angeordnete Düse mit der höheren Durchflussrate weist somit während der Durchführung des Verfahrens stets den größeren Abstand zum Stamm auf.

Die Durchführung des Verfahrens beruht auf der Verwendung einer mit einem Sprühbalken ausgestatteten Lanze, wobei die beiden im Bereich der Endabschnitte des Sprühbalkens angeordneten Düsen eine unterschiedliche Durchflussrate aufweisen.

Bevorzugt ist die Verwendung einer Lanze, die mit einem Sprühbalken mit einer Länge von bis zu 2 Metern verbunden ist, wobei sich die Durchflussraten der beiden mit dem Sprühbalken verbundenen Düsen um den Faktor 2 unterscheiden. Im Falle einer Balkenbreite von 1 m und der Anordnung der Düsen an den Endabschnitten des Balkens kann die Sprühbreite aufgrund der Aufweitung der Sprühkegel bis zu 2,5 m betragen.

Zur Herbizidbehandlung einer Fläche mit rechteckigem Grundmuster ist die Verwendung einer Lanze vorgesehen, die mit einem Sprühbalken verbunden ist, wobei die an den Sprühbalken angeschlossenen Düsen jeweils die gleiche Durchflussrate aufweisen.

Weiterbildungen, Vorteile und Anwendungsmöglichkeiten der Erfindung ergeben sich auch aus der nachfolgenden Beschreibung eines Ausführungsbeispiels und der Zeichnung. Alle beschriebenen und/oder bildlich dargestellten Merkmale bilden für sich oder in beliebiger Kombination den Gegenstand der Erfindung, unabhängig von ihrer Zusammenfassung in den Ansprüchen oder deren Rückbeziehung.

Es zeigt schematisch:

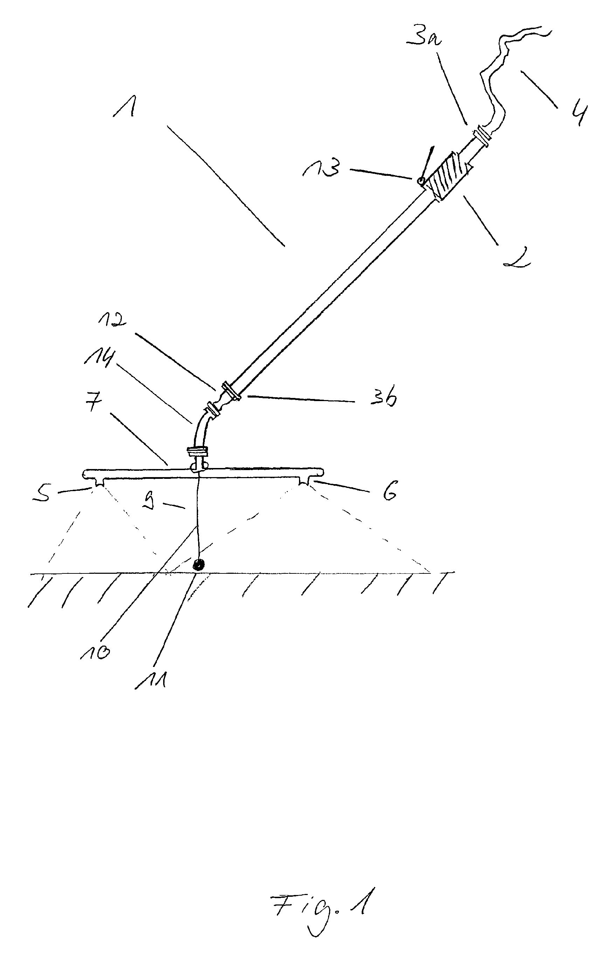

Fig. 1 Bestandteile einer Lanze mit einem zweidüsigen Sprühbalken

Fig. 1 zeigt die Lanze 1, die am eingangsseitigen Anschluss 3a mit dem Verbindungsschlauch 4 verbunden ist. Der Verbindungsschlauch 4 führt zum nicht gezeigten Vorratstank für die Spritzbrühe. Am ausgangsseitigen Anschluss 3b ist die Lanze 1 mit einem Konstantdruckventil 12 verbunden. Das Konstantdruckventil 12 ist ausgangsseitig wiederum mit dem Bogen-Stück 14 verbunden. An die Ausgangsseite des Bogen-Stücks 14 ist der Sprühbalken 7 angeschlossen. Der Sprühbalken 7 weist im Bereich seiner Endabschnitte die Düsen 5 und 6 auf. Im gezeigten Beispiel sind die Düsen 5 und 6 durch unterschiedliche Durchflussraten und unterschiedlich große Sprühbreiten gekennzeichnet.

Zur Konstanthaltung der Arbeitshöhe ist im Bereich des ausgangsseitigen Anschlusses 3b eine Distanzkontrolle 9 angeordnet. Die Distanzkontrolle 9 besteht aus einem flexiblen Material 10, an dem endseitig ein Gewicht 11 angeordnet ist. Durch die Konstanthaltung der Arbeitshöhe mithilfe der Distanzkontrolle 9 gelingt es dem Anwender, die Gesamtsprühbreite konstant zu halten. Im Bereich des Handgriffs 2 weist die Lanze ein Abstellventil 13 auf. Entscheidend für die Geringhaltung der Ausbringungsmengen ist die Kombination aus dem Konstantdruckventil 12 mit den beiden Düsen 5 und 6 sowie der Einsatz der Distanzkontrolle 9.

### Ausführungsbeispiel und Applikationsbeispiele

Die Einheit besteht aus einem Handgriff mit einem Momentabstellventil zum An- und Abstellen des Spritzvorgangs. Die Verbindung zum Schlauch der Rückenspritze des Anwenders wird durch einen Schlauchnippel im Bereich des eingangsseitigen Anschlusses (dem Adapter-Set sind versch. Größen beigefügt) gewährleistet. Zum Spritzbalken wird die Verbindung mit einem Messingrohr, welches mittels einer Überwurfmutter am Handgriff befestigt ist, hergestellt. Das Messingrohr hat eine Länge von 40 cm und einen Durchmesser von 8 mm. Es dient der Stabilisierung und zum Durchgang der Flüssigkeit zu dem Spritzbalken. Am Ende des Messingrohres sitzt ein CF-valve (Constant Flow Valve), welches den Spritzdruck konstant auf 1,5 bar reguliert. Eine Aluminiummuffe verbindet das CF-Valve mit dem Spritzbalken. Der Spritzbalken ist 1 m breit, misst 12 mm im Durchmesser und ist ebenfalls aus Aluminium. An den beiden Enden des Balkens ist jeweils ein Düsenhalter zur Aufnahme der Spritzdüsen befestigt. Im Gehäuse der Düsenhalter befinden sich je ein Düsenfilter der Siebgröße 100 mesh, die einen verstopfungsfreien Betrieb der Düsen gewährleisten.

Um eine gleichmäßige horizontale Verteilung der Spritzbrühe zu erreichen, muss eine Führungshöhe des Spritzbalkens über dem zu behandelnden Bestand von 0,7m eingehalten werden. Zur kontinuierlichen Kontrolle des Spritzabstandes wird als Distanzkontrolle eine 0,7m lange Schnur mit einer Holzkugel am Spritzbalken befestigt.

Die Düsen werden mit Überwurfmuttern an den Düsenhaltern befestigt. Die Düsen werden so ausgerichtet, dass der Düsenschlitz eine Linie mit dem Spritzbalken bildet, der schräg geformte Teil des Düsenschlitzes sollte immer in "Fahrtrichtung" zeigen. Je nach Anforderung können unterschiedliche Düsenkonfigurationen zum Einsatz kommen. Bei den zum Einsatz kommenden Düsen handelt es sich um Pralldüsen der Fa. Spraying Systems.

### Bandapplikation

Für diese Anwendung werden zwei Düsen (Turbo TeeJet 110 015) der Fa. Spraying Systems eingebaut. Die Düsen haben einen Spritzwinkel von 110 ° und einem Flüssigkeitsdurchfluss von 430 ml je Düse in 1 Minute. Daraus ergibt sich eine Ausbringmenge von 50 l/ha bei einer Arbeitsbreite von 2 m und einer Geschwindigkeit von 5,0 km/h.

### Kreisapplikation

Zur Gewährleistung einer gleichmäßigen Verteilung der Flüssigkeit auf der Kreisfläche, müssen unterschiedliche Düsenkaliber eingesetzt werden. Die der Kreismitte zugewandte Düse ist eine Turbo TeeJet 110 01, die äußere Düse eine Turbo TeeJet 110 02. Der Radius des Kreises beträgt 2m, bei einer Ausbringmenge von 280 ml (Düse 110 01) und 580 ml (Düse 110 02) ergibt sich eine Hektarmenge von 50 L bei einer Geschwindigkeit von 5,0 km/h.

### Teileliste

- 1: Lanze
- 2: Handgriff
- 3a: eingangsseitiger Anschluss
- 3b: ausgangsseitiger Anschluss
- 4: Verbindungsschlauch
- 5: Düse 1
- 6: Düse 2
- 7: Sprühbalken
- 8: Prall-Düse
- 9: Distanzkontrolle
- 10: Flexibles Material
- 11: Gewicht
- 12: Konstantdruckventil
- 13: Abstellventil
- 14: Bogen-Stück

## Patentansprüche

1. Lanze (1) für eine tragbare Rückenspritze mit
- einem eingangsseitigen Anschluss (3a) zum Anschließen der Lanze (1) an den zur Rückenspritze gehörenden Vorratstank und
- einem ausgangsseitigen Anschluss (3b), **dadurch gekennzeichnet, dass** im Bereich des ausgangsseitigen Anschlusses (3b) eine Distanzkontrolle (9) zur Konstanthaltung der Arbeitshöhe angeordnet ist.

2. Lanze (1) nach Anspruch 1, **dadurch gekennzeichnet, dass** die Distanzkontrolle (9) aus einem flexiblen oder aus einem starren Material besteht, wobei die starre Distanzkontrolle beweglich mit dem Bereich des ausgangsseitigen Anschlusses (3a) verbunden ist.

3. Lanze (1) nach Anspruch 1, **dadurch gekennzeichnet, dass** die Distanzkontrolle (9) aus einem stabartigen Abschnitt besteht, der mit dem Bereich des ausgangsseitigen Anschlusses (3b) starr verbunden ist.

4. Lanze (1) nach Anspruch 3, **dadurch gekennzeichnet, dass** der stabartige Abschnitt untenends zusätzlich mit einem flexiblen Material (10) verbunden ist.

5. Lanze (1) nach einem der Ansprüche 1, 2 und 4, **dadurch gekennzeichnet, dass** das flexible Material (10) jeweils entweder aus einem schnurartigen oder einem seilartigen Material oder aus einer Kette besteht.

6. Lanze (1) nach einem der Ansprüche 1, 2, 4 und 5, **dadurch gekennzeichnet, dass** an dem flexiblen Material (10) untenends ein Gewicht (11) befestigt ist.

7. Lanze (1) nach einem der vorhergehenden Ansprüche, **dadurch gekennzeichnet, dass** der ausgangsseitige Anschluss (3b) mit einem Bogenstück (14) verbunden ist.

8. Lanze (1) nach einem der vorhergehenden Ansprüche, **dadurch gekennzeichnet, dass** der ausgangsseitige Anschluss (3b) oder die Ausgangsseite des Bogenstücks (14) mit einem Konstantdruckventil (12) verbunden ist.

9. Lanze (1) nach einem der vorhergehenden Ansprüche, **dadurch gekennzeichnet, dass** an
- den ausgangsseitigen Anschluss (3b) der Lanze (1), oder an
- den ausgangsseitigen Anschluss des Bogenstücks (14), oder an
- den ausgangsseitigen Anschluss des Konstantdruckventils (12) entweder
- ein Sprühbalken (7) oder
- eine Einzeldüse (5, 6)
angeschlossen ist, wobei der Sprühbalken mindestens zwei jeweils voneinander beabstandete Anschlüsse für Einzeldüsen (5,6) aufweist.

10. Lanze (1) nach Anspruch 9, **dadurch gekennzeichnet, dass** die an dem Sprühbalken (7) angeordneten Düsen (5, 6) jeweils die gleiche oder eine unterschiedliche Durchflussrate aufweisen.

11. Lanze (1) nach Anspruch 10, **dadurch gekennzeichnet, dass** an dem Sprühbalken (7) im Bereich der Endabschnitte jeweils eine Düse (5, 6) angeordnet ist, wobei die Durchflussrate der einen Düse (5) etwa die Hälfte des Durchflussrate der anderen Düse (6) aufweist.

12. Lanze (1) nach Anspruch 11, **dadurch gekennzeichnet, dass** die Durchflussrate der einen Düse (5) etwa die Hälfte des Durchflussrate der anderen Düse (6) aufweist und die Länge des Sprühbalkens (7) etwa 1 bis 2 m beträgt.

13. Lanze (1) nach einem der Ansprüche 1 bis 10, **dadurch gekennzeichnet, dass** an dem Sprühbalken (7) jeweils zwei Prall-Düsen (5, 6) gleicher Art angeordnet sind.

14. Düsen- und Adapter-Set für tragbare Rückenspritzen verschiedener Hersteller zum Anschließen einer Lanze (1) nach einem der Ansprüche 1 bis 13 an einen Vorratstank oder an einen zum Spritztank führenden Verbindungsschlauch (4), mit einer Distanzkontrolle (9)
nach einem der Ansprüche 1 bis 6, wobei das Düsen-Set mindestens aufweist:
- ein Konstantdruckventil,
- zwei Prall-Düsen (5) mit gleicher oder unterschiedlicher Durchflussrate, und
- zwei Flachstrahldüsen (6) mit gleicher oder unterschiedlicher Durchflussrate, und wobei das Adapter-Set mindestens aufweist:
- einen Bogenstück (14) zum Anschluss an den ausgangsseitigen Anschluss (3b) der Lanze (1), und
- einen Sprühbalken (7) mit mindestens zwei Anschlüssen für Einzeldüsen (5, 6).

15. Düsen- und Adapter-Set für tragbare Rückenspritzen nach Anspruch 14, **dadurch gekennzeichnet, dass** das Düsen- und Adapter-Set zusätzliche eine Distanzkontrolle (9) zur Konstanthaltung der Arbeitshöhe einer Lanze (1) nach einem der Ansprüche 1 bis 13 beinhaltet.

16. Verfahren zur Herbizidbekämpfung im Bereich einer einen Baumstamm umgebenen Kreisfläche unter Verwendung einer mit einer Lanze (1) nach einem der Ansprüche 11 und 12 ausgestatteten Rückenspritze, **dadurch gekennzeichnet, dass** die Lanze während der Kreisbehandlung derart geführt wird, dass die Düse mit der geringeren Durchflussrate (5) dem Baumstamm stets näher ist als die Düse mit der größeren Durchflussrate (6).

17. Verwendung einer mit einer Lanze (1) nach einem der Ansprüche 11 bis 12 ausgestatteten Rückenspritze zur Herbizidbekämpfung im Bereich einer einen Baumstamm umgebenen Kreisfläche.

18. Verwendung einer mit einer Lanze (1) nach Anspruch 13 ausgestatteten Rückenspritze zur Herbizidbehandlung einer rechteckigen Fläche.
